# EUROPÄISCHE PATENTSCHRIFT

(11) **EP 0 413 107 B1**
(45) Veröffentlichungstag und Bekanntmachung des Hinweises auf die Patenterteilung: **22.02.1995**
(21) Anmeldenummer: 90111645.9
(22) Anmeldetag: 20.06.1990
(51) Int. Cl.: H04N 9/64

(54) **Einrichtung zum Bearbeiten von Videobildern**
Video picture processing apparatus
Dispositif de traitement des images vidéos

(30) Priorität: 12.08.1989 DE 3926742
(43) Veröffentlichungstag der Anmeldung: 20.02.1991
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Mahmud, Shabaz, GRUNDIG E.M.V., Max Grundig, D-8510 Fürth/Bay. (DE)

(56) Entgegenhaltungen:
- EP-A- 0 240 019
- US-A- 4 240 112

## Beschreibung

Die vorliegende Erfindung betrifft eine Einrichtung zum Verarbeiten von Videosignalen zur Erzielung von Farbeffekten bei Videogeräten, in denen das Bild bei der Verarbeitung in Bildpunkte aufgetrennt wird und diese Bildpunkte seriell in digitaler Form verarbeitet werden.

Einrichtungen zur Erzeugung von Farbeffekten blieben bisher meist auf Profigeräte beschränkt, da die Ausführung sehr aufwendig war. Neben analogen Methoden der Farbverfremdung gab es bei Geräten mit digitaler Bildverarbeitung die Möglichkeit, Bildinhalte in Bildspeichern abzulegen, zu manipulieren und dann weiterzuverarbeiten.

Weiterhin ist es bekannt, Bildmanipulationen mit Softwareprogrammen durchzuführen, wobei hier meist Schnittstellen zu Datenverarbeitungsanlagen notwendig sind.

Der Aufwand bei diesen Einrichtungen der Bildverfremdung ist dabei sehr groß.

Aus der US-Patentschrift US-A-4 240 112 ist eine Vorrichtung zum Erzeugen von Bildeffekten bei einem digital vorliegenden Videosignal bekannt, bei dem das analoge Videosignal zunächst in ein digitales Signal umgewandelt wird und in ein Luminazsignal und ein Chrominanzsignal aufgetrennt wird. Anschließend werden sowohl das Luminanzsignal als auch das Chrominanzsignal durch eine Manipulationsschaltung derart verändert, daß am Ausgang der Manipulationsschlatung ein Luminanzsignal bzw. Chrominanzsignal mit veränderter Auflösung erzeugt wird.

Dabei werden abhängig von einem Steuersignal ein oder mehrere bits geringer Wertigkeit mit einem vorgegebenen Wert besetzt, was zu einer geringeren Auflösung sowohl des Luminanzsignales als auch des Chrominanzsignales führt.

Auf diese Weise wird eine Bildverfremdung in der Art erreicht, daß das erhaltene Bild Ähnlichkeit mit einem Ölbild aufweist.

Aufgabe der Erfindung ist es deshalb eine Einrichtung anzugeben, mit der auf einfache Weise bei digitalisierten Videosignalen Farbveränderungen vorgenommen werden können.

Dies wird durch eine Einrichtung gemäß Anspruch 1 erreicht.

Bei Videogeräten, deren Signalverarbeitung digital erfolgt, werden in der Regel das Leuchtdichtesignal und das Farbsignal getrennt, wobei die erfindungsgemäße Einrichtung nur das Farbsignal betrifft. Weiterhin werden die einzelnen Bilder in Bildpunkte unterteilt, die der Horizontal- und der Vertikalauflösung entsprechen und jeder Bildpunkt wird als ein aus mehreren bits bestehendes Datenwort dargestellt, welches die Informationen über diesen Bildpunkt enthält. Die einzelnen Bildpunkte werden seriell verarbeitet, so, wie sie nach der D/A-Wandlung auf dem Bildschirm dargestellt werden bzw. wie sie vor der A/D-Wandlung empfangen oder aufgezeichnet wurden. Bei der Verarbeitung der einzelnen Bildpunkte wird in den Farbsignalweg eine Manipulationslogik eingefügt, welche nach einem bestimmten vorgebbaren Muster einzelne bits oder eine Bitgruppe verändert, wodurch Farbverfremdungen auf einfache Weise entstehen.

Die Erfindung wird im folgenden anhand von Zeichnungen näher erläutert, dabei zeigen:
- Fig. 1: Blockschaltbild der Einrichtung,
- Fig. 2: Zeitdiagramme der Zählereinheit,
- Fig. 3: Schaltbild der Manipulationslogik.

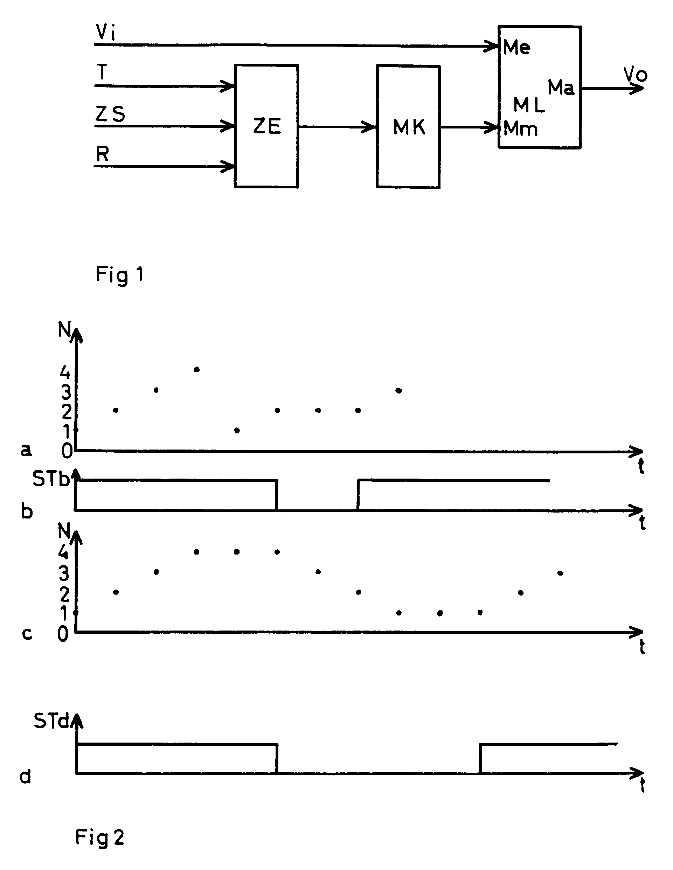

In Fig. 1 ist das Blockschaltbild der erfindungsgemäßen Anordnung dargestellt, die eine Manipulationslogik ML, eine Maskenlogik MK und eine Zählereinheit ZE enthält, wobei die Zählereinheit ZE aus einem Zähler und einer Ansteuerlogik besteht. Das zu verarbeitende digitale Videosignal Vi liegt bitparallel am Eingang Me der Manipulationslogik an und wird, je nachdem welche Maske gesetzt ist, verändert oder unverändert an den Ausgang Ma geführt.

An den Eingängen der Zählereinheit ZE liegen das Taktsignal T, ein Reset-Signal R und das Ansteuersignal ZS für die Zählereinheit ZE, in der festgelegt wird, nach welchem Modus gezählt wird. Die Funktion hierzu wird mit Hilfe von Fig. 2 erläutert.

Das Ausgangssignal der Zählereinheit ZE, d.h. der Zählerstand des darin enthaltenen Zählers, liegt am Eingang der Maskenlogik MK, die eine dem Zählerstand entsprechende Maske setzt, die an den Eingang Mm der Manipulationslogik ML gelegt wird.

Die Farbmanipulation erfolgt durch die Veränderung einzelner bits oder mehrerer bits eines Datenwortes, wobei in einem Datenwort jeweils die Farbinformationen eines Bildpunktes enthalten sind. Die Konfiguration der veränderten Stellen wird von der Maskenlogik festgelegt. In ihr werden einzelne bits gesetzt oder rückgesetzt, die angeben, ob das entsprechende bit im zu verarbeitenden Datenwort geändert wird oder nicht.

Die Maskenlogik wird von der Zählereinheit ZE angesteuert, d.h. die Maske wird entsprechend dem Zählerstand des in ZE enthaltenen Zählers gesetzt. Zu diesem Zweck wird in einer Ansteuerlogik ein 8-bit-Wort erzeugt, in dem die einzelnen bits entsprechend dem Zählerstand des Zählers gesetzt werden, wobei das 8-bit-Wort dann die Maske ist. Der Zähler umfaßt n+1 Zählstufen. Die Zahl n gibt an, wieviele verschiedene Möglichkeiten zur Farbmanipulation gegeben werden. Bei n=4 gibt es also 4 Möglichkeiten das Farbsignal Vi zu verändern und zusätzlich es unverändert an den Ausgang der Manipulationslogik ML weiterzugeben. Die Zählweise des Zählers ist abhängig von den Steuersignaien ZS, die auf die Zählersteuerung einwirken. Die Steuersignale ZS enthalten ein Zählsignal und ein Signal, das angibt in welchem Zählmodus gearbeitet wird. Weiterhin enthält ZS ein weiteres Steuersignal, das den Zähler so ansteuert, daß die in der Farbinformation enthaltenen Synchronisationssignale nicht verändert werden. Dieses weitere Steuersignal kann sowohl hardwaremäßig erzeugt als auch von einem im Videogerät enthaltenen Mikroprozessor erzeugt werden.

In Fig. 2 werden mit Hilfe eines Zeitdiagramms Möglichkeiten der Zählweise aufgezeigt. Es wird dabei vorausgesetzt, daß n=4 gilt. Somit ergibt sich beim Zählerstand 0 ein unverändertes Signal und bei den Zählerständen 1 bis 4 vier Stufen der Farbverfremdung.

In Fig. 2a ist ein Beispiel einer Zählweise dargestellt. Es wird der Zählwert über der Zeit aufgetragen. In Fig. 2b ist das Zählsignal STb über der Zeit aufgetragen. Hier sieht die Ansteuerung so aus, daß das in ZS enthaltene Signal, welches den Zählmodus vorgibt, bewirkt, daß der Zähler in einem bestimmten Zeitzyklus zählt, z.B. nach jedem vollständigen Bild oder nach einer vorbestimmten Zeit. Nach Erreichen des höchsten Zählwertes, hier vier, springt er auf den vorgegebenen Anfangswert, hier 1, zurück. Bei Ausblenden des Zählsignals STb bleibt der bestehende Zählwert erhalten und somit die Farbveränderung konstant. Mit dem Reset-Signal R wird der Zähler auf Null gesetzt und das Farbsignal von der Manipulationslogik nicht verändert. Ein weiteres Zeitdiagramm ist in Fig. 2c und 2d dargestellt. In 2c ist wieder der Zählwert über der Zeit aufgetragen und in Fig. 2d das Zählsignal STd. In diesem Fall wird bei Vorliegen des Zählsignal solange hochgezählt bis der höchste Zählstand erreicht ist und dieser wird dann solange beibehalten, bis das Zählsignal STd wegfällt und somit der Zähler rückwärts zählt bis zum Anfangswert. Auch hier wird durch Reset bewirkt, daß das Farbsignal Vi unverändert die Manipulationslogik durchläuft.

Die Zählsignale STb und STd können sowohl manuell durch den Bediener erzeugt werden oder aus anderen Signalen abgeleitet werden. Eine besonders vorteilhafte Ausgestaltung der Erfindung liegt darin, das Steuersignal aus einem Audiosignal herzuleiten. Zu diesem Zweck kann das Audiosignal einem Schmitt-Trigger zugeführt werden, der oberhalb einer Grenze den logischen Pegel 1 und unterhalb dieser Grenze den Pegel "0" ausgibt. Dieses Ausgangssignal des Schmitt-Triggers kann als Steuersignal STb bzw. STd dienen.

Eine weitere Möglichkeit der manuellen Bedienung besteht darin, mittels eines Tastenpaares Signale zu erzeugen, welche den Zähler vor- bzw. rückwärts zählen lassen.

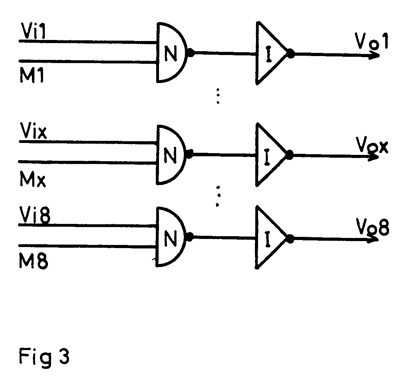

In Fig. 3 ist ein Ausführungsbeispiel der Manipulationslogik dargestellt. Hier wird vorausgesetzt, daß das Datenwort 8 bit lang ist. Für jedes bit ergibt sich eine Logik, die aus einem Nand-Gatter N und einem Inverter I besteht. Das Nand-Gatter N hat jeweils zwei Eingänge, die zum einen mit einem bit des Farbsignals Vᵢₓ belegt ist und zum anderen mit dem entsprechenden Maskenbit Mx, wobei x eine Zahl von 1 bis 8 ist. Wenn das Maskenbit logisch Null ist, dann liegt am Ausgang Vₒₓ immer Null, unabhängig vom Farbsignalbit Vᵢₓ. Liegt als Maskenbit die logische Eins an, dann wird das entsprechende bit Vᵢₓ erscheinen.

Ein weiteres Ausführungsbeispiel der Manipulationslogik besteht darin, den Inverter wegzulassen. In diesem Fall werden die bits, deren Maskenbit 1 ist, invertiert, während die anderen den Pegel 0 einnehmen. Das inverse Farbsignal ergibt sich, wenn alle Maskenbits 1 sind, d.h. wenn alle Bits invertiert werden.

Die Bildung des inversen Farbsignals ist auch dadurch möglich, daß das Farbsignal nur einem Inverter zugeführt wird, der alle Bits eines Datenwortes invertiert.

## Patentansprüche

1. Einrichtung zum Bearbeiten von Videosignalen zur Erzielung von Farbeffekten bei Videogeräten, in denen das Bild bei der Verarbeitung in Bildpunkte aufgetrennt wird und diese Bildpunkte digital verarbeitet werden,
**dadurch gekennzeichnet**, daß die
einzelnen Bildpunktsignale jeweils als einzelne aus mehreren bits bestehende Datenwörter bitparallel an einer Manipulationslogik (ML) anliegen und dort einzelne oder mehrere bits eines Datenwortes, welches die digitale Farbinformation eines Bildpunktes enthält, entsprechend einer Auswahl durch eine Maske verändert werden und diese Maske in einer Maskenlogik (MK) erzeugt wird, wobei eine Zähleinheit (ZE), bestehend aus einem Zähler und einer Ansteuerlogik, die Maskenlogik (MK) in Abhängigkeit des Zählerstandes ansteuert.

2. Einrichtung nach Anspruch 1,
**dadurch gekennzeichnet**, daß
der Bediener die Zählimpulse der Zählereinheit (ZE) manuell über eine Bedieneinheit eingibt.

3. Einrichtung nach Anspruch 1,
**dadurch gekennzeichnet**, daß
die Zählimpulse aus einer Zeitschleife abgeleitet werden, wobei nach einer vorbestimmten Zeit ein Zählimpuls erzeugt wird.

4. Einrichtung nach Anspruch 1,
**dadurch gekennzeichnet**, daß
die Zählimpulse von Synchronisationssignalen abgeleitet werden, wobei nach einer vorbestimmten Anzahl von Synchronisationssignalen ein Zählimpuls erzeugt wird.

5. Einrichtung nach Anspruch 1,
**dadurch gekennzeichnet**, daß
ein Audiosignal an einen Schmitt-Trigger geführt wird, dessen Ausgang den logischen Pegel 1 einnimmt, wenn die Amplitude eine bestimmte Amplitudengrenze überschreitet und den logischen Pegel 0 einnimmt, wenn diese Grenze unterschritten wird, und diese logischen Pegel zur Ansteuerung des Zählers derart benutzt werden, daß der Zähler in Abhängigkeit des logischen Pegels vor- oder rückwärts zählt, wobei nach Erreichen der n-ten Stufe bzw. des Wertes 0 der Zählereinheit (ZE) der Zählerstand solange beibehalten wird, bis wieder in die andere Richtung gezählt wird.

6. Einrichtung nach einem der Ansprüche 1 bis 5,
**dadurch gekennzeichnet**, daß
die Manipulationslogik (ML) so ausgeführt ist, daß bei Vorliegen eines vorgegeben Musters der Maske alle bits eines anliegenden Datenwortes invertiert.

7. Einrichtung nach einem der Ansprüche 1 bis 6,
**dadurch gekennzeichnet**, daß beim
Erkennen von Synchronisationssignalen keine Veränderung der Datenwörter durch die Manipulationslogik erfolgt.

## Revendications

1. Dispositif pour traiter des signaux vidéo pour l'obtention d'effets de couleurs dans des appareils vidéo, dans lesquels l'image est subdivisée, lors du traitement, en des points d'image et ces points d'image sont traités numériquement, caractérisé en ce que les signaux individuels des points d'image sont appliques, en parallèle au niveau des bits, respectivement sous la forme de mots de données individuels constitués de plusieurs bits, à un circuit logique de manipulation (ML), et dans ce circuit, des bits individuels ou plusieurs bits d'un mot de données, qui contient l'information numérique de couleur d'un point d'image, sont modifiés en fonction d'une selection au moyen d'un masque et ce masque est produit dans un circuit logique de production de masques (MK), une unité formant compteur (ZE), constituée par un compteur et par un circuit logique de commande, commandant le circuit logique de production de masques (MK) en fonction de l'état du compteur.

2. Dispositif selon la revendication 1, caractérisé en ce que l'utilisateur introduit manuellement les impulsions de comptage de l'unité formant compteur (ZE) par l'intermédiaire d'une unité de commande.

3. Dispositif selon la revendication 1, caractérisé en ce que les impulsions de comptage sont dérivées d'une boucle temporelle, une impulsion de comptage étant produite au bout d'un intervalle de temps prédéterminé.

4. Dispositif selon la revendication 1, caractérisé en ce que les impulsions de comptage sont dérivés de signaux de synchronisation, une impulsion de comptage étant produite au bout d'un nombre prédéterminé de signaux de synchronisation.

5. Dispositif selon la revendication 1, caractérisé en ce qu'un signal audio est envoyé à une bascule de Schmitt, dont la sortie prend le niveau 1 logique, lorsque l'amplitude dépasse, par valeurs supérieures, une limite d'amplitude déterminée, et prend le niveau 0 logique lorsque l'amplitude dépasse, par valeurs inférieures, cette limite, et ces niveaux logiques sont utilisés pour commander le compteur de telle sorte qu'en fonction du niveau logique, le compteur effectue un comptage progressif ou régressif, auquel cas, une fois atteint le n-ème étage ou la valeur 0 de l'unité formant compteur (ZE), l'état du compteur est conservé jusqu'à ce que le comptage s'effectue à nouveau dans l'autre sens.

6. Dispositif selon l'une des revendications 1 à 5, caractérisé en ce que le circuit logique de manipulation (ML) est agencé de telle sorte que, dans le cas de la presence d'un modèle prédéterminé du masque, tous les bits d'un mot de données present sont inversés.

7. Dispositif selon l'une des revendications 1 à 6, caractérisé en ce que lors de l'identification de signaux de synchronisation, aucune modification du mot de données n'est effectué au moyen de la logique de manipulation.

## Claims

1. Device for processing video signals in order to achieve colour effects in the case of video appliances in which the image is separated into pixels during processing and these pixels are processed digitally, characterized in that the individual pixel signals are in each case applied in bit-parallel form to manipulation logic (ML) as individual data words comprising a plurality of bits and, there, individual bits or a plurality of bits of a data word which contains the digital colour information of a pixel are changed in accordance with a selection by a mask, and this mask is produced using mask logic (MK), a counting unit (ZE) comprising a counter and drive logic driving the mask logic (MK) as a function of the counter level.

2. Device according to Claim 1, characterized in that the operator enters the counting pulses into the counter unit (ZE) manually via a control unit.

3. Device according to Claim 1, characterized in that the counting pulses are derived from a time loop, a counting pulse being produced after a predetermined time.

4. Device according to Claim 1, characterized in that the counting pulses are derived from synchronization signals, a counting pulse being produced after a predetermined number of synchronization signals.

5. Device according to Claim 1, characterized in that an audio signal is fed to a Schmitt trigger whose output assumes the logic level 1 when the amplitude exceeds a specific amplitude limit and assumes the logic level 0 when the amplitude is less than this limit, and these logic levels are used to drive the counter in such a manner that the counter counts upwards or downwards as a function of the logic level, the counter unit (ZE) maintaining the counter level after reaching the nth stage or the value 0 until counting takes place in the other direction again.

6. Device according to one of Claims 1 to 5, characterized in that the manipulation logic (ML) is designed such that all the bits of an applied data word are inverted in the presence of a predetermined pattern of the mask.

7. Device according to one of Claims 1 to 6, characterized in that, on identification of synchronization signals, no change in the data words is carried out by the manipulation logic.
